# EUROPEAN PATENT APPLICATION

(11) **EP 4 000 973 A1**
(43) Date of publication of application: **25.05.2022**
(21) Application number: 21208824.9
(22) Date of filing: 17.11.2021
(51) Int. Cl.: B60G 17/018, G05B 13/02, G06N 3/04, G06N 3/08

(54) **THE USE OF NEURAL NETWORKS IN CONTROL SYSTEMS**

(30) Priority: 18.11.2020 US 202016951508
(71) Applicant: DUS Operating, Inc., Auburn Hills, MI 48326 (US)
(72) Inventor: SINGH, Sanjay, 48326 Auburn Hills (US); MANSOUR, Iyad Faisal Ghazi, 48326 Auburn Hills (US); VALSAN, Sanjiv, 48326 Auburn Hills (US)
(74) Representative: Neumann Müller Oberwalleney Patentanwälte PartG mbB

(57) **Abstract**

A neural network control system and method includes vehicle sensors in communication with a neural network controller in a vehicle. The neural network (NN) operates in at least two modes: a training mode and a control mode. The NN consists of at least computational five layers the layers containing a plurality of neurons. Sensor data is received by an NN controller and processed through the layers where each of the neurons applies a weight to the sensor data. In the training mode the weights are continuously adjusted until a threshold difference between a known reference signal and a plant output is achieved. In the control mode, the NN controller continuously and recursively sends a control signal commanding the plant to adjust an actuator position in response to the sensor data until a disturbance in the sensor data is substantially eliminated.

## Description

The present disclosure relates to motor vehicles, and more specifically to control systems for managing motor vehicle dynamics. Typical control system in motor vehicles utilize classical proportional integral derivative (PID) and/or model predictive control (MPC) methods to solve control problems within a motor vehicle. Classical PID and MPC systems and methods require accurate tuning, high processing capacity and significant quantities of processing time. Likewise, classical PID and MPC systems and methods can become inaccurate when handling input signals that differ from expected ranges of values and/or when the PID and/or MPC systems and methods are required to handle data from multiple input/output systems. Similarly, classical PID and MPC systems and methods can produce unpredictable results when used to solve complex non-linear real-world problems that cannot be accurately represented by a precise mathematical model.

Accordingly, while current classical PID and MPC systems and methods for managing motor vehicle dynamics achieve their intended purpose, there is a need for new and improved systems and methods that increase the speed, portability, processing power and accuracy of motor vehicle control system calculations while also increasing the capability of such control systems to adapt to varying real-world and simulated input signals and improve the accuracy of control system outputs by solving complex non-linear real-world problems that cannot be represented by precise mathematical models.

### SUMMARY

According to several aspects, a neural network control system for a vehicle includes one or more sensors disposed on the vehicle, the one or more sensors detecting vehicle state information and disturbances. The control system further includes a controller disposed within the vehicle and having a processor, a memory, and one or more input output (I/O) ports. The I/O ports receive input data from the one or more sensors. The processor executes programmatic control logic stored within the memory. The programmatic logic operates in a neural network (NN) having a plurality of computational layers. The programmatic control logic further includes a first control logic for receiving a reference signal and for receiving the vehicle state information and disturbances from the one or more sensors via the I/O ports. A second control logic utilizes the vehicle state information and disturbances as input to a plurality of neurons in the computational layers of the neural network (NN). In a third control logic, each of the neurons in each of the plurality of computational layers applies a predetermined weight to the vehicle state information and disturbances. A fourth control logic generates a control signal as a NN output. A fifth control logic receives, within a plant disposed on the vehicle, the NN output and the disturbances. A sixth control logic generates a plant output based on the control signal and the disturbances. A seventh control logic calculates a difference between the plant output and the reference signal. An eighth control logic generates a second control signal as the NN output. The second control signal is based on the reference signal, the vehicle state information, the disturbances, and the difference between the plant output and the reference signal. The control signal commands one or more actuators disposed on the motor vehicle to alter position. The processor continuously and recursively executes the first, second, third, fourth, fifth, sixth, seventh, and eighth control logics to continuously and actively respond to the vehicle state information and disturbances, and to substantially eliminate any disturbances detected by the one or more sensors.

In another aspect of the present disclosure the vehicle state information includes a road profile displacement, a road profile velocity, an unsprung mass displacement, an unsprung mass velocity, an unsprung mass acceleration, a sprung mass displacement, a sprung mass velocity, and a sprung mass acceleration.

In yet another aspect of the present disclosure the plurality of computational layers further includes a first layer having a first quantity of neurons and generating a first output, a second layer receiving the first output, the second layer having a second quantity of neurons less than the first quantity of neurons, and generating a second output. The plurality of computational layers further includes a third layer receiving the second output, the third layer having a third quantity of neurons less than the second quantity of neurons, and generating a third output, and a fourth layer receiving the third output, the fourth layer having a fourth quantity of neurons less than the third quantity of neurons, and generating a fourth output. A fifth layer of the computational layers receives the fourth output. The fifth layer has a fifth quantity of neurons less than the fourth quantity of neurons and generates a fifth output, where the fifth output is the control signal.

In still another aspect of the present disclosure the controller operates in at least two modes including a training mode and a control mode. In the training mode, the weights of the neurons of the NN are different from one another, and the weights are continuously and recursively adjusted until a threshold difference between the reference signal and the plant output is met. In the control mode, the plant output causes the one or more actuators to alter position.

In still another aspect of the present disclosure in the training mode, the neurons of the NN each have randomized weights. Each of the neurons is fed with vehicle state information, the disturbances and the reference signal. The reference signal is a known set of values and the NN output is an estimated control signal based on the vehicle state information, the disturbances, and the reference signal.

In still another aspect of the present disclosure the control signal and the estimated control signal are taken as input by a learning algorithm. The learning algorithm adjusts the weights of the neurons based on the difference between the control signal and the estimated control signal recursively until the reference signal is substantially identical to the plant output.

In still another aspect of the present disclosure in the control mode, the control signal continuously and actively commands one or more actuators of an active suspension system to alter position in response to a vehicle state information and disturbances in the shape of a road surface over which the vehicle is driving.

In still another aspect of the present disclosure the active suspension system includes a sprung mass movably coupled by at least one spring and at least one damper to a unsprung mass; the unsprung mass movably coupled to at least one wheel; the wheel equipped with a tire having a spring coefficient and a damping ratio. One or more of the spring, the damper, the unsprung mass, and the wheel includes an actuator capable of altering positions in response to the control signal.

In still another aspect of the present disclosure the active suspension actuators include: active dampers having adjustable damping ratios, active anti-roll bars having adjustable torque or torsion, active springs having adjustable spring rates, pumps and valves in active hydraulic suspension systems, and pumps and valves in active pneumatic suspension systems.

In still another aspect of the present disclosure a neural network control method for a vehicle control system includes detecting vehicle state information and disturbances with one or more sensors disposed on the vehicle. The method further includes receiving, by one or more input/output (I/O) ports of a controller disposed within a vehicle, a reference signal, vehicle state information and disturbances. The controller has a processor, a memory, and the I/O ports; the processor executing programmatic control logic stored within the memory, the programmatic logic operating in a neural network (NN) having a plurality of computational layers. The method further includes utilizing the vehicle state information and disturbances as input to a plurality of neurons in the plurality of computational layers in the NN, and applying by each of the neurons in each of the plurality of computational layers, a predetermined weight to the vehicle state information and disturbances. The method further includes generating a control signal as a NN output, and receiving within a plant disposed on the vehicle, the NN output and the disturbances. The method further includes generating a plant output based on the control signal and the disturbances, and calculating a difference between the plant output and the reference signal. The method further includes generating a second control signal as the NN output, the second control signal is based on the reference signal, the vehicle state information, the disturbances, and the difference between the plant output and the reference signal. The method further includes commanding one or more actuators disposed on the vehicle to alter position, and continuously and recursively executing, by the processor, control logic to continuously and actively respond to the vehicle state information and disturbances. The method further includes substantially eliminating any disturbances detected by the one or more sensors.

In still another aspect of the present disclosure receiving a reference signal, vehicle state information and disturbances further includes determining, by the one or more sensors, a road profile displacement, a road profile velocity, an unsprung mass displacement, an unsprung mass velocity, an unsprung mass acceleration, a sprung mass displacement, a sprung mass velocity, and a sprung mass acceleration.

In still another aspect of the present disclosure the neural network control method further includes receiving the vehicle state information and disturbances as input to a first layer of the plurality of computational layers, the first layer having a first quantity of neurons, the first layer generating a first output. The method further includes receiving the first output as an input to a second layer having a second quantity of neurons less than the first quantity of neurons, the second layer generating a second output, and receiving the second output as an input to a third layer having a third quantity of neurons less than the second quantity of neurons, the third layer generating a third output. The method further includes receiving the third output as an input to a fourth layer having a fourth quantity of neurons less than the third quantity of neurons, the fourth layer generating a fourth output. The method further includes receiving the fourth output as an input to a fifth layer having a fifth quantity of neurons less than the fourth quantity of neurons, the fifth layer generating a fifth output. The fifth output is the control signal.

In still another aspect of the present disclosure the neural network control method further includes operating the neural network in at least two modes including a training mode and a control mode. In the training mode, the weights of the neurons of the NN are different from one another, and the weights are continuously and recursively adjusted until a threshold difference between the reference signal and the plant output is met. In the control mode, the plant output causes the one or more actuators to alter position.

In still another aspect of the present disclosure the neural network control method further includes feeding the neurons of the NN with vehicle state information, the reference signal and the disturbances. In the training mode, the neurons of the NN each have randomized weights. The reference signal is a known set of values and the NN output is an estimated control signal based on the vehicle state information, the disturbances, and the reference signal.

In still another aspect of the present disclosure the neural network control method further includes sending the control signal and the estimated control signal as input to a learning algorithm. The method further includes calculating a difference between the control signal and the estimated control signal. The method further includes recursively adjusting, by the learning algorithm, the weights of the neurons based on the difference between the control signal and the estimated control signal until the reference signal is substantially identical to the plant output.

In still another aspect of the present disclosure the neural network control method further includes continuously and actively commanding, in the control mode, one or more actuators of an active suspension system to alter position in response to a vehicle state information and disturbances in the shape of a road surface over which the vehicle is driving.

In still another aspect of the present disclosure the neural network control method further includes utilizing an active suspension system having a sprung mass movably coupled by at least one spring and at least one damper to an unsprung mass; the unsprung mass movably coupled to at least one wheel. The wheel is equipped with a tire having a spring coefficient and a damping ratio. In response to the control signal, the method actively alters positions of one or more actuators of the active suspension system. The one or more actuators include: the spring, the damper, the unsprung mass, and the wheel.

In still another aspect of the present disclosure the neural network control method further includes adjusting a damping ratio of one or more active dampers, adjusting a torque or torsion of one or more active anti-roll bars, adjusting spring rates of one or more active springs, adjusting hydraulic pressure in an active hydraulic suspension system by changing fluid flow through pumps and valves of the active hydraulic suspension system, and adjusting pneumatic pressure in an active pneumatic suspension system by changing gas flow through pumps and valves of the active pneumatic suspension system.

In still another aspect of the present disclosure a neural network control method for a vehicle control system includes engaging the neural network in one of at least two modes including a training mode and a control mode. The method further includes detecting vehicle state information and disturbances with one or more sensors disposed on the vehicle, and receiving, by one or more input/output (I/O) ports of a controller disposed within a vehicle, a reference signal, vehicle state information and disturbances. The controller has a processor, a memory, and the I/O ports. The processor executes programmatic control logic stored within the memory. The programmatic logic operates in a neural network (NN) having a plurality of computational layers. The method further includes utilizing the vehicle state information and disturbances as input to a plurality of neurons in the plurality of computational layers in the NN. A predetermined weight is to the vehicle state information and disturbances is applied by each of the neurons in each of the plurality of computational layers. A control signal is generated as a NN output. The NN output and disturbances are received within a plant disposed on the vehicle. The method further includes generating a plant output based on the control signal and the disturbances, and calculating a difference between the plant output and the reference signal. The method further includes generating a second control signal as the NN output, the second control signal is based on the reference signal, the vehicle state information, the disturbances, and the difference between the plant output and the reference signal. The method further includes continuously and recursively executing, by the processor, control logic to continuously and actively respond to the vehicle state information and disturbances. In the control mode of the NN, substantially eliminating any disturbances detected by the one or more sensors by continuously and actively commanding, in a control mode, one or more actuators of an active suspension system to alter position in response to the vehicle state information and disturbances in a shape of a road surface over which the vehicle is driving, the one or more actuators comprising: a spring, a damper, and an unsprung mass. In the training mode of the NN, continuously and recursively adjusting weights of the neurons in the NN until a threshold difference between the reference signal and the plant output is met. The weights of the neurons of the NN are initially different from one another.

In still another aspect of the present disclosure, the neural network control method further includes feeding the neurons of the NN with vehicle state information, the reference signal and the disturbances in the training mode. In the training mode, the neurons of the NN each have randomized weights, and the reference signal is a known set of values and the NN output is an estimated control signal based on the vehicle state information, the disturbances, and the reference signal. The method further includes sending the control signal and the estimated control signal as input to a learning algorithm and calculating a difference between the control signal and the estimated control signal. The method further includes recursively adjusting, by the learning algorithm, the weights of the neurons based on the difference between the control signal and the estimated control signal until the reference signal is substantially identical to the plant output.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

The drawings described herein are for illustration purposes only and are not intended to limit the scope of the present disclosure in any way.
FIG. 1 is a schematic view of a vehicle having a neural network control system according to an exemplary embodiment;
FIG. 2A is a schematic view of the neural network control system of FIG. 1 in a training mode according to an exemplary embodiment;
FIG. 2B is a schematic view of the neural network control system of FIG. 1 in a control mode according to an exemplary embodiment;
FIG. 3 is a schematic view of a portion of the neural network control system of FIGS. 1, 2A, and 2B depicting a plurality of computational layers according to an exemplary embodiment;
FIG. 4 is a partial schematic view of an active suspension system of a vehicle having the neural network control system of FIGS. 1-3, according to an exemplary embodiment; and
FIG. 5 is a flowchart depicting a neural network control method for a vehicle control system according to an exemplary embodiment.

### DETAILED DESCRIPTION

The following description is merely exemplary in nature and is not intended to limit the present disclosure, application, or uses.

In the claims and specification the terms "forward", "rear", "inner", "inwardly", "outer", "outwardly", "above", and "below" are terms used relative to the orientation of a vehicle 10 as shown in the drawings of the present application. Thus, "forward" refers to a direction toward a front of a vehicle 10, "rearward" refers to a direction toward a rear of a vehicle 10, "inner" and "inwardly" refers to a direction towards the interior of a vehicle 10, and "outer" and "outwardly" refers to a direction towards the exterior of a vehicle 10, "below" refers to a direction towards the bottom of the vehicle 10, and "above" refers to a direction towards a top of the motor vehicle.

In the claims and specification, certain elements are designated as "first", "second", "third", "fourth", "fifth", "sixth", etc. These are arbitrary designations intended to be consistent only in the section in which they appear, i.e. the specification or the claims or the summary, and are not necessarily consistent between the specification, the claims, and the summary. In that sense they are not intended to limit the elements in any way and a "second" element labeled as such in the claim may or may not refer to a "second" element labeled as such in the specification. Instead, the elements are distinguishable by their disposition, description, connections, and function.

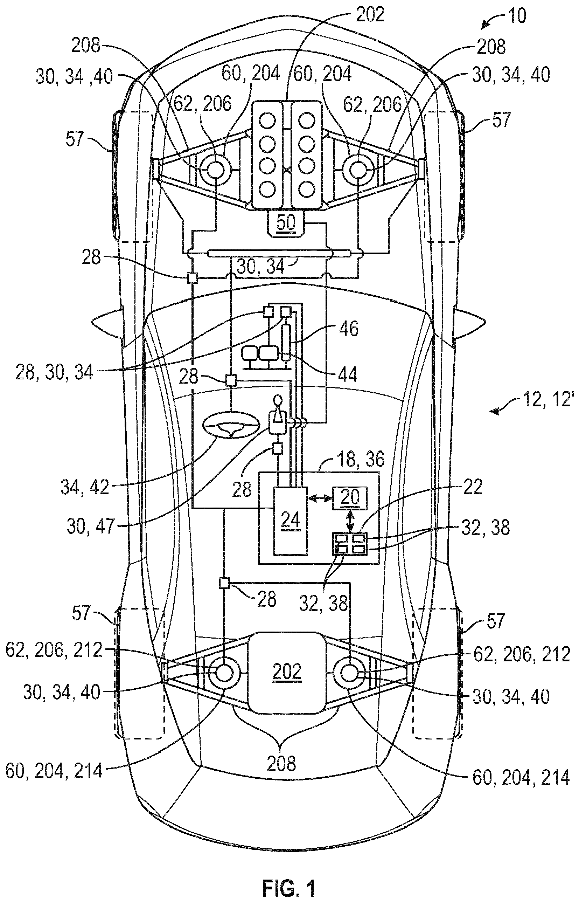

Referring to FIG. 1, a vehicle 10 having a control system 12 is shown. The vehicle 10 displayed in FIG. 1 is a car, however, it should be appreciated that the vehicle 10 may be any type of vehicle, including cars, trucks, sport utility vehicles (SUVs), buses, vans, semis, tractors, trailers, all-terrain vehicles (ATVs), trains, trolleys, trams and other such on and off-road vehicles, as well as any variety of aircraft or watercraft without departing from the scope or intent of the present disclosure. The control system 12 generally includes a controller 18 which is a non-generalized, electronic control device having a preprogrammed digital computer or processor 20, non-transitory computer readable medium or memory 22 used to store data such as control logic, software applications, instructions, computer code, data, lookup tables, etc., and one or more input/output (I/O) ports 24. Computer readable medium includes any type of medium capable of being accessed by a computer, such as read only memory (ROM), random access memory (RAM), a hard disk drive, a compact disc (CD), a digital video disc (DVD), or any other type of memory. A "non-transitory" computer readable medium or memory 22 excludes wired, wireless, optical, or other communication links that transport transitory electrical or other signals. A non-transitory computer readable medium or memory 22 includes media where data can be permanently stored and media where data can be stored and later overwritten, such as a rewritable optical disc or an erasable memory device. Computer code includes any type of program code, including source code, object code, and executable code. The processor 20 is configured to execute the code or instructions. Where the control system 12 is a vehicle 10, the controller 18 may be a dedicated Wi-Fi controller or an engine control module, a transmission control module, a body control module, a suspension control module, an info-tainment control module, or the like. The I/O ports 24 are configured to communicate via wired or wireless connections with the with one or more sensors 28 and one or more actuators 30 of the vehicle 10. In examples where wireless communication between the I/O ports 24, controller 18, sensors 28, and actuators 30 is used, such communications are carried out using Wi-Fi protocols under IEEE 802.11x.

The control system 12 further includes one or more applications 32. An application 32 is a software program configured to perform a specific function or set of functions. The application 32 may include one or more computer programs, software components, sets of instructions, procedures, functions, objects, classes, instances, related data, or a portion thereof adapted for implementation in a suitable computer readable program code. The applications 32 may be stored within the memory 22 or in additional or separate memory. Examples of the applications 32 include audio or video streaming services, games, browsers, social media, etc.

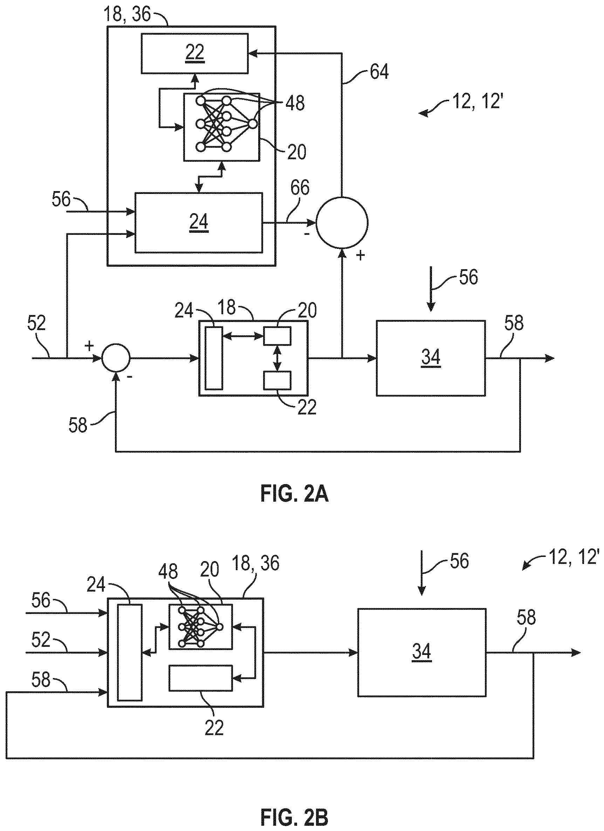

Referring now to FIGS. 2A and 2B, and with continuing reference to FIG. 1, the control system 12 is shown in further detail. Specifically, the control system 12 of FIGS. 2A and 2B is an artificial neural network (ANN) control system 12' that learns by examples and prior experience, and provides accurate control signals for different control tasks. The ANN control system 12' of FIGS. 2A and 2B is a generalized ANN control system 12' consisting of the controller 18, a plant 34, and a neural network (NN) controller 36 having a learning algorithm 38. In several aspects, the learning algorithm 38 is an application 32, stored in memory 22 of the controller18. The plant 34 is a mathematical representation of a system, and particularly a vehicle 10 system to be controlled. In some examples, the plant 34 is a mathematical representation of an active suspension system 40, a steering system 42, a cruise control system (not specifically shown), a braking system 44, a throttle system 46, a transmission control system 47, or the like.

The ANN control system 12' operates in at least two modes including a training mode as depicted in FIG. 2A, and a control mode as depicted in FIG. 2B. The NN controller 36 includes millions of neurons 48 with randomized weights (W). Each of the neurons 48 is fed with vehicle state information 50 including vehicle speed, vehicle acceleration or deceleration rates, steering wheel angles, throttle position, brake position, thermal information, and the like. The NN controller 36 also receives desired response or reference signal 52. The reference signal 52 is experimentally-determined, mathematically predicted based on known reference information, or the like.

The controller 18 of the ANN control system 12' receives input data and generates a control signal 54. The control signal 54 is taken as an input to the plant 34, along with certain disturbances 56. The disturbances 56 may be any of a wide variety physical, electrical, hydraulic, pneumatic, or other such information. For example, in a vehicle 10 utilizing the ANN control system 12' in an active suspension system 40, when the vehicle 10 is traveling over an ideal completely straight and smooth road surface no disturbances 56 or perturbations in the suspension system 40 result from the physical characteristics of the road surface. However, when the vehicle 10 in the example traverses a pothole, the active suspension system 40 reacts in at last two ways: first, the active suspension system 40 reacts to the disturbance 56 in the vehicle's 10 suspension system to maintain road-holding characteristics and traction; and second, the active suspension system 40 reacts to the disturbance 56 to actively damp perturbation in the articulation of one or more wheels 57 of the vehicle 10 and to thereby maintain ride quality and comfort for occupants of the vehicle 10. In other words, the plant 34 receives the control signal 54 and the disturbances 56 and generates a plant output 58. The plant output 58 in an active suspension system 40 may be an alteration in spring force in a shock absorbing device 60, an alteration in the damping characteristics of a damping device 62, an alteration in physical length of certain suspension components, any combination of the above, or the like. The plant output 58 is compared to the control signal 54 and the error 64 between the desired response or reference signal 52 and the plant output 58 is recursively input back into the controller 18 of the ANN control system 12'.

In order to increase the accuracy, precision, and responsiveness of the ANN control system 12', the control signal 54 is also compared to a NN controller output or NN output 66. The NN output 66 is an estimation of the control signal 54 based on the vehicle state information, disturbances 56, and desired response or reference signal 52 input to the NN controller 36. A difference between the control signal 54 and the NN output 66 is input into the learning algorithm 38. The learning algorithm 38 utilizes the difference between the control signal 54 and the NN output 66 to adjust the weights W of the neurons 48 in the NN controller 36. In the training mode of FIG. 2A, the above-described processes are carried out hundreds of thousands of times in the ANN control system 12' in order to refine the responses of the ANN control system 12' until the desired response or reference signal 52 is substantially identical to the plant output 58.

In an example, the training mode operates to train the neural network over forty-one epochs. By the end of the training mode, after the forty-one epochs, the validation and testing errors between the desired response or reference signal 52 and the plant output 58 is reduced to 10⁻³ and 10⁻² respectively. At the point where the validation and testing errors are reduced to 10⁻³ and 10⁻² respectively, the desired response or reference signal 52 and the plant output 58 may be considered substantially identical. Furthermore, once the desired response or reference signal 52 is substantially identical to the plant output 58, the ANN control system 12' is considered fully trained and may be deployed in a vehicle 10 in the control mode of FIG. 2B. it should be appreciated that different quantities of epochs may be used in differing applications, and such differing quantities of epochs are therefore within the scope and intent of the present disclosure.

In FIG. 2B, the ANN control system 12' is shown in a deployed or control mode in which the ANN control system 12' operates as the control system 12 for a vehicle 10 system to be controlled. When in the control mode, neuron 48 weights W determined during the training mode shown in FIG. 2A are used. The NN controller 36 receives the desired response or reference signal 52, vehicle state information and disturbances 56, and generates the control signal 54. The NN controller 36 transmits the control signal 54 to the plant 34. One or more sensors 28 and actuators 30 of the vehicle 10 report real-time disturbances 56' to the plant 34 as well. The real-time disturbances 56' may be any of a variety of different types of disturbance 56 depending on the particular vehicle 10 system being controlled. For example, in an active suspension system 40, the sensors 28 and actuators 30 receive information about suspension component position and movement, as well as overall vehicle 10 pitch, roll, yaw, velocity, speed, acceleration, and the like. The plant 34 combines the real-time disturbances 56' and the control signal 54 to generate the plant output 58. In the example of an active suspension system 40, the plant output 58 is sent back to the actuators 30 to make live or real-time adjustments to the active suspension system 40, or the control system 12 more generally.

The plant output 58 is also sent back to the NN controller 36 as an additional input for generation of subsequent control signals 54. That is, the NN controller 36 utilizes the plant output 58, the desired response or reference signal 52, and the vehicle state information and disturbances 56 as input, and generates a control signal 54 based thereon. Moreover, the NN controller 36 continuously refines and updates the control signal 54 based on prior experience as described above with respect to the training mode in FIG. 2A, as well as including new data points. That is, if the vehicle 10 encounters a disturbance 56 not previously experienced in the training mode, the NN controller 36 adapts to the new disturbance 56 by utilizing a nearest known approximation for the disturbance 56 to generate a control signal 54. The control signal 54 is then fed to the plant 34, the plant 34 generates a plant output 58 based on the control signal 54, and the plant output 58 signal is fed back into NN controller 36. The plant output 58 is then compared to the control signal 54 and the vehicle state information and disturbances 56, and a subsequent iteration of the above calculations commences. Once the new disturbance 56 has been fully addressed by the NN controller 36 and the disturbance 56 has been substantially or completely eliminated from the vehicle 10, the ANN control system 12' then adds the new disturbance 56 as an input for which the ANN control system 12' has prior experience.

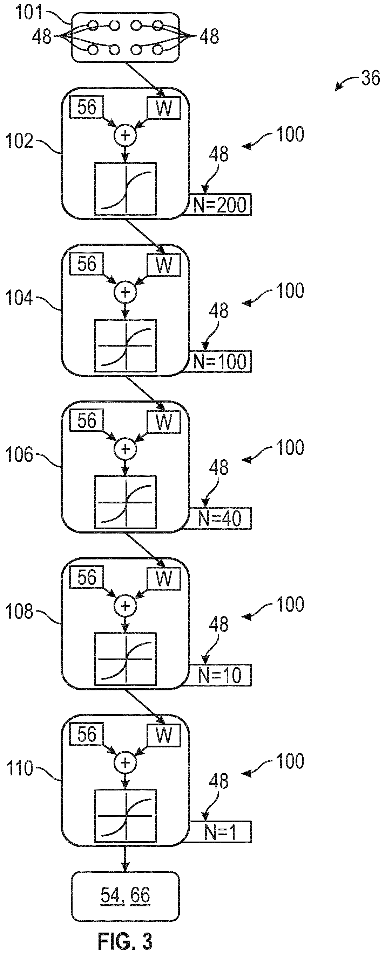

Turning now to FIG. 3, and with continuing reference to FIGS. 1-2B, a schematic diagram of a plurality of neural network layers in the NN controller 36 is shown in FIG. 3. In an exemplary NN controller 36 for use in an active suspension system 40, the NN controller 36 receives inputs from the sensors 28 and actuators 30 of the active suspension system 40 in an input layer 101. The input layer for an ANN control system 36 for controlling an exemplary active suspension system 40 of the present disclosure includes eight neurons 48. The each of the input layer 101 neurons 48 is used for a single input. Some exemplary inputs include: road profile velocity *Ẋr,* road profile displacement *Xr,* unsprung mass acceleration *Ẍu,* unsprung mass velocity Ẋu, unsprung mass displacement Xu, sprung mass acceleration Ẍs, sprung mass velocity Ẋs, and sprung mass displacement Xs. The eight inputs listed above, *Ẋr, Xr, Ẍu,* Ẋu, Xu*,* Ẍs,Ẋs, and Xs are measurements collected by the sensors 28 and actuators 30. It should be appreciated that some active suspension systems 40 may have more or fewer sensors 28 and actuators 30 without departing from the scope or intent of the present disclosure.

The NN controller 36 includes a plurality of layers 100, each of the layers 100 including one or more neurons 48. Each of layers 100 generates outputs that are sent to a subsequent one of the layers 100. As the outputs are sent from each layer 100 to the subsequent one of the layers 100, the outputs more closely approach the control signal 54 necessary to generate the plant output 58 that will damp out or otherwise substantially eliminate any perturbations or disturbances 56 detected by the sensors 28 and/or actuators 30.

In a specific example, the inputs *Ẋr, Xr, Ẍu, Ẋu,* Xu, Ẍs, Ẋs, and Xs are sent to a first layer 102 of the NN controller 36. The first layer 102 of the NN controller 36 includes two hundred neurons 48. A weight W is applied to each of the inputs *Ẋr, Xr, Ẍu,* Ẋu, Xu*,* Ẍs, Ẋs, and Xs at each of the two hundred neurons 48. The neurons 48 also carry out calculations that determine a plant output 58 and control signal 54 to address perturbations or disturbances 56 detected by the sensors 28 and actuators 30.

Outputs from the first layer 102 are sent to a second layer 104. The second layer 104 contains one hundred neurons 48. At each of the one hundred neurons 48 in the second layer 104, a weight W is applied to each of the outputs *Ẋr, Xr,* Ẋu, *Ẋu,* Xu, Ẍs, Ẋs, and Xs from the first layer 102. The neurons 48 of the second layer 104 carry out calculations to determine a plant output 58 and control signal 54 necessary to achieve the plant output 58 and to address perturbations or disturbances 56 detected by the sensors 28 and actuators 30.

Outputs from the second layer 104 are sent to a third layer 106. The third layer 106 contains forty neurons 48. At each of the forty neurons 48 in the third layer 106, a weight W is applied to each of the outputs *Ẋr, Xr, Ẍu,* Ẋu, Xu*,* Ẍs, Ẋs, and Xs from the second layer 104. The neurons 48 of the third layer 106 carry out calculations to determine a plant output 58 and control signal 54 necessary to achieve the plant output 58 and to address perturbations or disturbances 56 detected by the sensors 28 and actuators 30.

Outputs of the third layer 106 are sent to a fourth layer 108. The fourth layer 108 contains ten neurons 48. At each of the ten neurons 48 in the fourth layer 108, a weight W is applied to each of the outputs *Ẋr, Xr, Ẍu,* Ẋu, Xu*,* Ẍs, Ẋs, and Xs from the third layer 106. The neurons 48 of the fourth layer 108 carry out calculations to determine a plant output 58 and control signal 54 necessary to achieve the plant output 58 and to address perturbations or disturbances 56 detected by the sensors 28 and actuators 30.

Outputs of the fourth layer 108 are sent to a fifth layer 110. The fifth layer 110 contains a single neuron 48. At the single neuron 48 in the fifth layer 110, a weight W is applied to each of the outputs *Ẋr, Xr, Ẍu,* Ẋu, Xu*,* Ẍs, Xs, and Xs from the fourth layer 108. The single neuron 48 of the fifth layer 110 carries out calculations to determine a plant output 58 and control signal 54 necessary to achieve the plant output 58 and to address perturbations or disturbances 56 detected by the sensors 28 and actuators 30. More specifically, the output of the fifth layer 110 defines the control signal 54 for the control system 12.

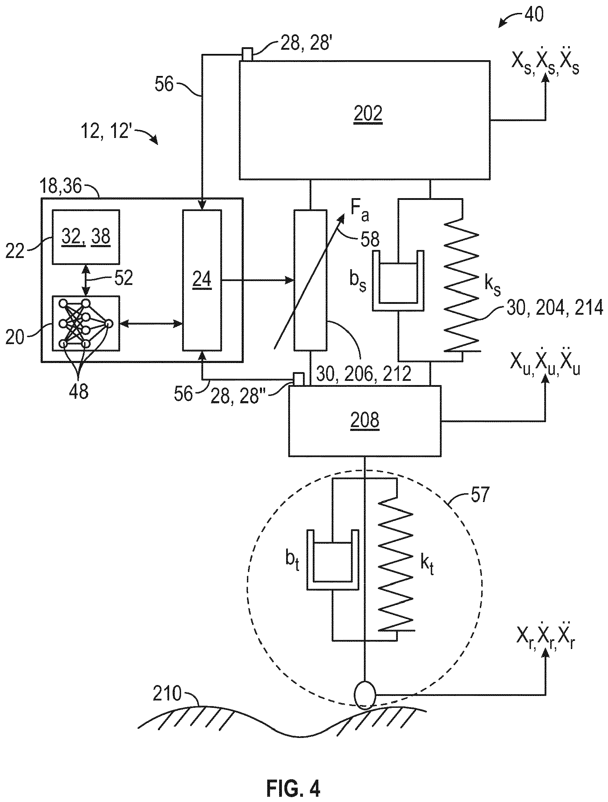

Turning now to FIG. 4 and with continuing reference to FIGS. 1-3, the NN controller 36 is depicted in use in FIG. 4 in additional detail. Specifically, the example of FIG. 4 is an active suspension system 40 utilizing a NN controller 36. The active suspension system 40 includes a wheel 57 connected to a sprung mass 202 by a spring 204 having a sprung mass spring constant kₛ and a damper 206 having a damping ratio bₛ. The wheel 57 articulates relative to the sprung mass 202 through one or more control arms (not specifically shown), or other such structural elements of the active suspension system 40 of the vehicle 10. Because the control arms and other such structural elements of the active suspension system 40 are not carried by the spring 204 and damper 206, they are referred to as having unsprung mass 208. The wheel 57 of the active suspension system 40 may have a tire (not specifically shown). The wheel 57, tire, or combination thereof have a tire spring coefficient kt and a tire damping ratio bt. As the wheel 57 rolls along a road surface 210, variations in the texture of the road surface, such as undulations of the road surface 210 cause the wheel 57 to displace vertically as denoted by xᵣ.The wheel displacement xᵣ is partially reduced by movement or deflection of the tire, but at least some of such wheel displacement xᵣ is typically transferred to the control arms and other such structural elements. Accordingly, the unsprung mass 208 also displaces vertically as denoted by xᵤ. Unsprung mass displacement xᵤ is undesirable, as it can substantially reduce ride comfort in a vehicle 10 as well as decreasing vehicle 10 stability and increasing noise, vibration, and harshness (NVH) characteristics of the vehicle 10. That is, a significant proportion of the unsprung mass displacement xᵤ may be transferred into sprung mass 202 displacement as denoted by xₛ.

The active suspension system 40 operating through the NN controller 36 reduces or substantially eliminates the unsprung mass displacement xᵤ, and the sprung mass displacement xₛ by receiving sprung mass 202 and unsprung mass 208 displacement information xₛ, xᵤ, through a sprung mass sensor 28' and an unsprung mass sensor 28". Each of the sprung and unsprung mass sensors 28', 28" detect position, velocity, and acceleration data (*Ẋr, Xr, Ẍu,* Ẋu*,* Xu, Ẍs, Ẋs, and Xs) relating to each of the sprung and unsprung masses 202, 208. The position, velocity, and acceleration data (*Ẋr, Xr,* Ẋu, Ẋu, Xu, Ẍs, Ẋs, and Xs) from the sprung and unsprung mass sensors 28', 28" are fed into the NN controller 36 of the active suspension system 40 as disturbance 56 information. Based on the results of the training mode of the NN controller 36, the active suspension system 40 determines the desired response or reference signal 52 matching the position, velocity, and acceleration data (*Ẋr, Xr*, Ẋu, Ẋu, Xu,Ẍs, Ẋs, and Xs) from the sprung and unsprung mass sensors 28', 28". These data are then put through the plurality of layers 100 of the NN controller 36 with the output of the NN controller 36 being the control signal 54 to of the control system 12.

In the example of an active suspension system 40, the actuator 30 is an active damper 212, active spring 214, or the like. The actuator 30 is connected between the sprung mass 202 and the unsprung mass 208. By altering a position of the actuator 30, the actuator 30 applies generates a plant output 58 in the form of a force imparted to the sprung mass 202, and reduces a difference between the sprung mass displacement Xs and the unsprung mass displacement Xu while allowing the road profile displacement Xr to vary independent of both the sprung and unsprung mass displacements Xs, Xu. Thus, in a practical example, the wheel 57 follows the road surface 210 and is displaced by the road profile displacement Xr, but such displacement of the wheel 57 is effectively decoupled from the sprung and unsprung mass displacements Xs,Xu.

While in the foregoing description, the control system 12 and ANN control system 12' have been primarily described with respect to an active suspension system 40 for a vehicle 10, it should be appreciated that the active suspension system 40 is merely intended to be a non-limiting example. In fact, the control system 12 and ANN control system 12' of the present disclosure may be used in a wide variety of applications without departing from the scope or intent of the present disclosure. In some examples, the control system 12 and ANN control system 12' may be used to address disturbances in an active suspension system 40, a steering system 42, a cruise control system including a radar-guided cruise control system (not specifically shown), a braking system 44, a throttle system 46, a radar-guided cruise control system, a transmission control system 47, in a wide variety of autonomous or semi-autonomous driving systems for vehicles 10, or the like. In some examples, the control system 12 and ANN control system 12' may be used in aircraft, watercraft, or the like, as well as in road vehicles 10.

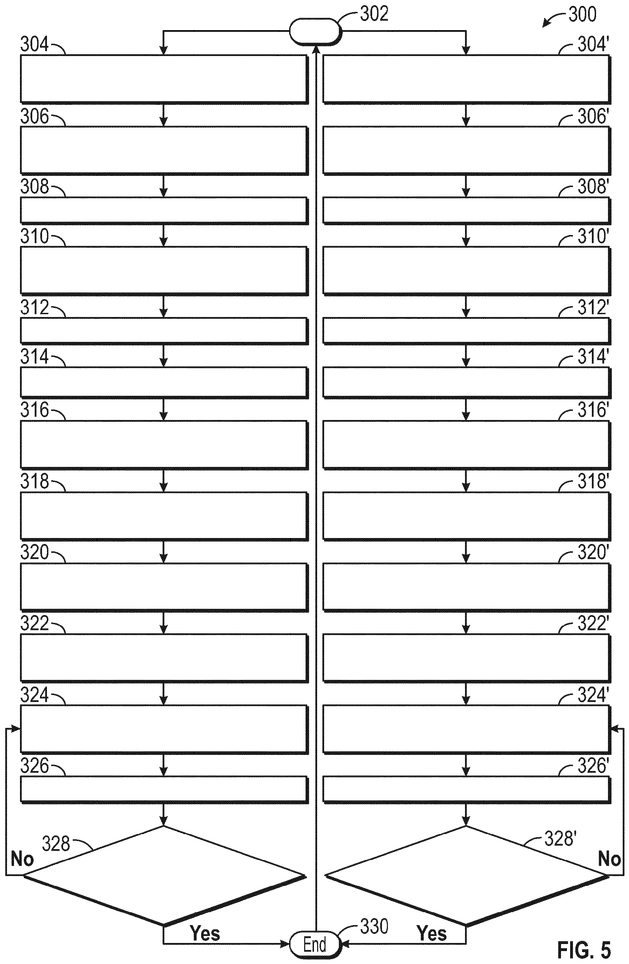

Turning now to FIG. 5, and with continuing reference to FIGS. 1-4, a method 300 for using an ANN control system 12' of the present disclosure is shown in flowchart form. The method 300 begins at block 302 where the ANN control system 12' engages in at least one of the training mode or the control mode. In subsequent blocks 304 - 326, the method 300 progresses in the training mode, while at blocks 304' - 326', the method 300 progresses in the control mode. At blocks 304 and 304', the method 300 detects vehicle state information and disturbances 56 with one or more sensors 28 disposed on the vehicle 10. At blocks 306 and 306', the controller 18 or NN controller 36 receives, via the I/O ports 24, the reference signal 52, as well as the vehicle state information and disturbances 56.

At blocks 308 and 308', the processor 20 executes programmatic control logic stored within the memory 22 operating in a neural network having a plurality of computational layers 100. At blocks 310 and 310', the vehicle state information and disturbances 56 are used as input to a plurality of neurons in each of the plurality of computational layers 100 in the NN. At blocks 312 and 312', each of the neurons 48 applies an individual predetermined weight W to the vehicle state information and disturbances 56. Each of the neurons 48 is initialized with a weight W different than the other neurons 48.

At blocks 314 and 314', and after passing through each of the computational layers 100 of the NN, the processor 20 generates the control signal 54 as the NN output 66. At blocks 316 and 316', the plant 34 receives the NN output 66 as well as current disturbances 56. At blocks 318 and 318', the plant 34 generates the plant output 58 in based on the control signal 54 and the disturbances 56. At blocks 320 and 320', the controller 18 and/or NN controller 36 calculate a difference between the plant output 58 and the reference signal 52. At blocks 322 and 322', the controller 18 and/or NN controller 36 generates a second control signal 54 as the NN output 66. The second control signal 54 is based on the reference signal 52, the vehicle state information, the disturbances 56, and the difference between the plant output 58 and the reference signal 52. At blocks 324 and 324', the processor 20 executes control logic to continuously and actively respond to the vehicle state information and disturbances 56.

At block 326, in the training mode of the NN, the controller 18, and/or NN controller 36 continuously and recursively adjusts the weights W of the neurons 48 in the plurality of layers 100 of the NN. At block 328, the controller 18, and/or NN controller continuously compares the reference signal 52 to the plant output 58 to determine if a threshold difference between the reference signal 52 and the plant output 58 has been achieved. If the threshold difference has not been reached, the method 300 returns to block 324 continually until the threshold difference is achieved.

By contrast, when the method 300 is operating in the control mode, at block 326', the processor 20 executes control logic that operates the NN to substantially eliminate any disturbances 56 detected by the one or more sensors 28. At block 328' if the disturbances 56 have not been substantially eliminated or otherwise reduced below a threshold value, the method 300 returns continually to block 324' until the threshold value for the disturbance 56 has been achieved. To substantially eliminate the disturbances 56, the processor 20 continuously and actively commands one or more actuators 30 of an active control system 12 of the vehicle 10, such as the active suspension system 40 to alter position in response to the vehicle state information and disturbances 56 in a shape of a road surface 210 over which the vehicle 10 is driving. In some examples, the one or more actuators 30 include a spring 204, a damper 206, and an unsprung mass 208.

At block 330, once either the threshold difference between the reference signal 52 and the plant output 58 is met in the training mode, or the threshold value for the disturbance 56 has been achieved in the control mode, the method 300 ends and returns to block 302 where the method 300 runs continuously and recursively to eliminate the disturbances 56 and the effects of the disturbances 56 on the vehicle 10.

A neural network control system and method for controlling vehicle 10 control systems 12, 12' of the present disclosure offers several advantages. These include decreasing costs of production and programming, increased ability to adapt to previously-encountered and entirely new stimuli (disturbances 56, etc.), and increasing the speed and accuracy of control systems 12, 12' used for responding to a variety of non-linear real-world problems that cannot simply be represented by precise mathematical models. The system and method 300 of the present disclosure also have the advantage of being trainable in an entirely simulation-based arrangement. That is, simulation data may be used to train the ANN control system 12' without requiring real-world input. This is especially helpful when real-world data does not yet exist. Accordingly, the system 12, 12' and method 300 of the present disclosure may be used in a variety of different control tasks. That is, while in the foregoing, much of the detailed description focuses on use of the neural network control system and method 300 for an active suspension system 40, such discussion is intended to be merely an explanatory example. Substantially identical systems and methods 300 may be used in a variety of other control systems 12 in vehicles 10 without departing from the scope or intent of the present disclosure.

The description of the present disclosure is merely exemplary in nature and variations that do not depart from the gist of the present disclosure are intended to be within the scope of the present disclosure. Such variations are not to be regarded as a departure from the spirit and scope of the present disclosure.

## Claims

1. A neural network control system for a vehicle, the neural network control system comprising:
one or more sensors disposed on the vehicle, the one or more sensors detecting vehicle state information and disturbances;
a controller disposed within the vehicle and having a processor, a memory, and one or more input output (I/O) ports, the I/O ports receiving input data from the one or more sensors; the processor executing programmatic control logic stored within the memory, the programmatic logic operating in a neural network (NN) having a plurality of computational layers, the programmatic control logic comprising:
a first control logic for receiving a reference signal and for receiving the vehicle state information and disturbances from the one or more sensors via the I/O ports;
a second control logic utilizing the vehicle state information and disturbances as input to a plurality of neurons in the computational layers of the neural network (NN);
a third control logic wherein each of the neurons in each of the plurality of computational layers applies a predetermined weight to the vehicle state information and disturbances;
a fourth control logic for generating a control signal as a NN output;
a fifth control logic for receiving within a plant disposed on the vehicle, the NN output and the disturbances;
a sixth control logic for generating a plant output based on the control signal and the disturbances;
a seventh control logic for calculating a difference between the plant output and the reference signal; and
an eighth control logic for generating a second control signal as the NN output, the second control signal is based on the reference signal, the vehicle state information, the disturbances, and the difference between the plant output and the reference signal; and
wherein the control signal commands one or more actuators disposed on the motor vehicle to alter position, and wherein the processor continuously and recursively executes the first, second, third, fourth, fifth, sixth, seventh, and eighth control logics to continuously and actively respond to the vehicle state information and disturbances, and to substantially eliminate any disturbances detected by the one or more sensors.

2. The neural network control system for a vehicle of claim 1 wherein the vehicle state information comprises:
a road profile displacement, a road profile velocity, an unsprung mass displacement, an unsprung mass velocity, an unsprung mass acceleration, a sprung mass displacement, a sprung mass velocity, and a sprung mass acceleration.

3. The neural network control system for a vehicle of claim 1 or 2 wherein the plurality of computational layers further comprises:
a first layer having a first quantity of neurons and generating a first output;
a second layer receiving the first output, the second layer having a second quantity of neurons less than the first quantity of neurons, and generating a second output;
a third layer receiving the second output, the third layer having a third quantity of neurons less than the second quantity of neurons, and generating a third output;
a fourth layer receiving the third output, the fourth layer having a fourth quantity of neurons less than the third quantity of neurons, and generating a fourth output; and
a fifth layer receiving the fourth output, the fifth layer having a fifth quantity of neurons less than the fourth quantity of neurons and generating a fifth output, wherein the fifth output is the control signal.

4. The neural network control system for a vehicle of any one of claims 1 to 3 wherein the controller operates in at least two modes including:
a training mode; and
a control mode,
wherein in the training mode, the weights of the neurons of the NN are different from one another, and the weights are continuously and recursively adjusted until a threshold difference between the reference signal and the plant output is met; and
wherein in the control mode, the plant output causes the one or more actuators to alter position.

5. The neural network control system for a vehicle of claim 4 wherein in the training mode, the neurons of the NN each have randomized weights, and each of the neurons is fed with vehicle state information, the disturbances and the reference signal, wherein the reference signal is a known set of values and the NN output is an estimated control signal based on the vehicle state information, the disturbances, and the reference signal.

6. The neural network control system for a vehicle of claim 5 wherein the control signal and the estimated control signal are taken as input by a learning algorithm, and the learning algorithm adjusts the weights of the neurons based on the difference between the control signal and the estimated control signal recursively until the reference signal is substantially identical to the plant output.

7. The neural network control system for a vehicle of any one of claims 4 to 6 wherein in the control mode, the control signal continuously and actively commands one or more actuators of an active suspension system to alter position in response to a vehicle state information and disturbances in the shape of a road surface over which the vehicle is driving.

8. The neural network control system for a vehicle of claim 7 wherein the active suspension system comprises:
a sprung mass movably coupled by at least one spring and at least one damper to an unsprung mass; the unsprung mass movably coupled to at least one wheel; the wheel equipped with a tire having a spring coefficient and a damping ratio, and
wherein one or more of the spring, the damper, the unsprung mass, and the wheel includes an actuator capable of altering positions in response to the control signal.

9. The neural network control system for a vehicle of claim 7 or 8 wherein the active suspension actuators comprise: active dampers having adjustable damping ratios, active anti-roll bars having adjustable torque or torsion, active springs having adjustable spring rates, pumps and valves in active hydraulic suspension systems, and pumps and valves in active pneumatic suspension systems.

10. A neural network control method for a vehicle control system, in particular according to any one of claims 1 to 9, the method comprising:
detecting vehicle state information and disturbances with one or more sensors disposed on the vehicle;
receiving, by one or more input/output (I/O) ports of a controller disposed within a vehicle, a reference signal, vehicle state information and disturbances, wherein the controller has a processor, a memory, and the I/O ports; the processor executing programmatic control logic stored within the memory, the programmatic logic operating in a neural network (NN) having a plurality of computational layers;
utilizing the vehicle state information and disturbances as input to a plurality of neurons in the plurality of computational layers in the NN;
applying by each of the neurons in each of the plurality of computational layers, a predetermined weight to the vehicle state information and disturbances;
generating a control signal as a NN output;
receiving within a plant disposed on the vehicle, the NN output and the disturbances;
generating a plant output based on the control signal and the disturbances;
calculating a difference between the plant output and the reference signal; and
generating a second control signal as the NN output, the second control signal is based on the reference signal, the vehicle state information, the disturbances, and the difference between the plant output and the reference signal; and
commanding one or more actuators disposed on the vehicle to alter position;
continuously and recursively executing, by the processor, control logic to continuously and actively respond to the vehicle state information and disturbances; and
substantially eliminating any disturbances detected by the one or more sensors.

11. The neural network control method of claim 10 wherein receiving a reference signal, vehicle state information and disturbances further comprises:
determining, by the one or more sensors, a road profile displacement, a road profile velocity, an unsprung mass displacement, an unsprung mass velocity, an unsprung mass acceleration, a sprung mass displacement, a sprung mass velocity, and a sprung mass acceleration.

12. The neural network control method of claim 10 or 11 wherein utilizing the vehicle state information and disturbances as input to a plurality of neurons in the plurality of computational layers in the NN further comprises:
receiving the vehicle state information and disturbances as input to a first layer of the plurality of computational layers, the first layer having a first quantity of neurons, the first layer generating a first output;
receiving the first output as an input to a second layer having a second quantity of neurons less than the first quantity of neurons, the second layer generating a second output;
receiving the second output as an input to a third layer having a third quantity of neurons less than the second quantity of neurons, the third layer generating a third output;
receiving the third output as an input to a fourth layer having a fourth quantity of neurons less than the third quantity of neurons, the fourth layer generating a fourth output; and
receiving the fourth output as an input to a fifth layer having a fifth quantity of neurons less than the fourth quantity of neurons, the fifth layer generating a fifth output, wherein the fifth output is the control signal.

13. The neural network control method of any one of claims 10 to 12 further comprising:
operating the neural network in at least two modes including a training mode and a control mode;
wherein in the training mode, the weights of the neurons of the NN are different from one another, and the weights are continuously and recursively adjusted until a threshold difference between the reference signal and the plant output is met; and
wherein in the control mode, the plant output causes the one or more actuators to alter position.

14. The neural network control method of claim 13 further comprising:
feeding the neurons of the NN with vehicle state information, the reference signal and the disturbances, wherein in the training mode, the neurons of the NN each have randomized weights, and wherein the reference signal is a known set of values and the NN output is an estimated control signal based on the vehicle state information, the disturbances, and the reference signal.

15. The neural network control method of claim 13 or 14 further comprising:
continuously and actively commanding, in the control mode, one or more actuators of an active suspension system to alter position in response to a vehicle state information and disturbances in the shape of a road surface over which the vehicle is driving.
